# EUROPEAN PATENT SPECIFICATION

(11) **EP 3 751 176 B1**
(45) Date of publication and mention of the grant of the patent: **17.05.2023**
(21) Application number: 19751527.3
(22) Date of filing: 24.01.2019
(51) Int. Cl.: F16H 57/038, B25F 5/00, F16H 1/14, H02K 7/116, F16H 57/04, H02K 7/14

(54) **GEAR STRUCTURE, AND MOTOR ASSEMBLY AND POWERED TOOL EACH HAVING GEAR STRUCTURE**
GETRIEBESTRUKTUR UND MOTORANORDNUNG SOWIE ANGETRIEBENES WERKZEUG MIT JEWEILS EINER GETRIEBESTRUKTUR
STRUCTURE D'ENGRENAGE ET ENSEMBLE MOTEUR ET OUTIL ÉLECTRIQUE AYANT CHACUN UNE STRUCTURE D'ENGRENAGE

(30) Priority: 09.02.2018 JP 2018022452
(43) Date of publication of application: 16.12.2020
(73) Proprietor: Nitto Kohki Co., Ltd., Tokyo 146-8555 (JP)
(72) Inventor: YOKOYAMA, Toshiki, Tokyo 146-8555 (JP)
(74) Representative: Schmidbauer, Andreas Konrad
(86) International application number: PCT/JP2019/002192
(87) International publication number: WO 2019/155893

(56) References cited:
- EP-A1- 3 273 098
- JP-A- 2015 058 525
- JP-A- 2015 058 525
- JP-Y1- S4 723 724
- US-A1- 2016 131 243

## Description

### Technical Field:

The present invention relates to a gear structure including bevel gears, a motor assembly including the gear structure, and a power tool including the motor assembly. Background Art:

For example, a power tool using an electric motor as a power source, such as a drill, includes a gear structure comprising a plurality of gears to transmit the rotational output of the electric motor while reducing the speed thereof. There are various forms of gear structure. One form of gear structure includes bevel gears.

A gear structure including bevel gears has a first bevel gear rotatably drivably connected to the output shaft of a motor, and a second bevel gear rotatably drivably connected to the output side of a power tool. The first bevel gear and the second bevel gear are disposed in a gear housing in such a manner that the respective rotation axes of the two bevel gears intersect each other substantially at right angles. In the gear structure having the above-described bevel gears, the space in the gear housing in which the bevel gears are disposed is relatively large because the two bevel gears are disposed substantially perpendicular to each other (Patent Literature 1). The bevel gears in the gear housing are coated with a lubricant, e.g. grease, in order to reduce the frictional resistance between the bevel gears.
JP 2015 058525 A discloses a gear structure comprising a gear housing, a first bevel gear disposed in the gear housing rotatably about a first rotation axis, and a second bevel gear disposed in the gear housing rotatably about a second rotation axis intersecting the first rotation axis, the second bevel gear being in mesh with the first bevel gear, wherein the gear housing has a gear facing surface extending annularly to face teeth of the second bevel gear in a direction of the second rotation axis, and wherein the gear facing surface has a lubricant receiving portion located forward of the first bevel gear in a rotational direction of the second bevel gear and a lubricant application portion being closer to the second bevel gear than the lubricant receiving portion, and a guide portion extending from the lubricant receiving portion to the lubricant application portion to guide the lubricant received by the lubricant receiving portion to the lubricant application portion.
EP 3 273 098 A1 discloses A baffle for a gear may comprise a baffle wall and a baffle outlet, the baffle wall having a peripheral portion at least partially defining a channel, the channel extending circumferentially around an axial centerline, the channel configured to receive lubricant through a slot, the slot extending circumferentially around the axial centerline. The baffle wall may be configured to prevent a subset of gear teeth from receiving lubricant. A width of the slot may vary along a circumferential direction. A cross-section area of the channel may vary along the circumferential direction. The cross-section area of the channel may increase along a direction of rotation of the subset of gear teeth.

### Citation List:

### Patent Literature:

Patent Literature 1: Japanese Patent Application Publication No. 2005-22055 Summary of Invention:

### Technical Problem:

The lubricant applied to the bevel gears in the gear housing is gradually splashed by the centrifugal force of the rotating bevel gears, and the splashed lubricant adheres to the inner surface of the gear housing and will not flow but remain there as it is. Consequently, the amount of lubricant adhering to the teeth of the bevel gears gradually decreases, so that the lubricity between the bevel gears decreases, resulting in an increase in the frictional resistance. As a result, the teeth of the bevel gears may wear, and there may be a reduction in the efficiency of power transmission between the bevel gears.

The present invention has been made in view of the above-described problem of the prior art, and it is an object of the present invention to provide a gear structure configured to allow lubricant once splashed from the bevel gears to be applied to the bevel gears again, thereby enabling the lubricant to be kept on the bevel gears for a longer period of time, and/or to provide a motor assembly including the gear structure, and/or further to provide a power tool including the motor assembly.

### Solution to Problem:

The invention is set out in the appended set of claims. An aspect of the present invention provides a gear structure including a gear housing, a first bevel gear disposed in the gear housing rotatably about a first rotation axis; and a second bevel gear disposed in the gear housing rotatably about a second rotation axis intersecting the first rotation axis, the second bevel gear being in mesh with the first bevel gear. The gear housing has a gear facing surface extending annularly to face teeth of the second bevel gear in the direction of the second rotation axis. The gear facing surface has a lubricant receiving portion located forward of the first bevel gear in the rotational direction of the second bevel gear to receive lubricant splashed from the first bevel gear, a lubricant application portion located forward of the lubricant receiving portion in the rotational direction, the lubricant application portion being closer to the second bevel gear than the lubricant receiving portion, and a guide portion extending from the lubricant receiving portion to the lubricant application portion to guide the lubricant received by the lubricant receiving portion to the lubricant application portion.

As the first bevel gear rotates, the lubricant adhering to the teeth of the first bevel gear is gradually splashed by centrifugal force. In particular, at the forward side in the rotational direction of the second bevel gear, the lubricant is splashed from the first bevel gear toward the gear facing surface of the gear housing. In the gear structure, the lubricant receiving portion of the gear facing surface is configured to receive at least a part of the lubricant splashed from the first bevel gear. Further, because the lubricant is continuously splashed from the first bevel gear, the lubricant received by the lubricant receiving portion is pushed by the lubricant splashed subsequently to flow gradually in the rotational direction, and while being guided by the guide portion, the lubricant reaches the lubricant application portion. The lubricant application portion is in close proximity to the second bevel gear; therefore, the lubricant reaching the lubricant application portion comes into contact with the second bevel gear, thereby being applied to the second bevel gear. The lubricant applied to the second bevel gear is also applied to the first bevel gear when the second bevel gear meshes with the first bevel gear. Thus, in the gear structure, lubricant once splashed from the first bevel gear flows from the lubricant receiving portion via the guide portion to reach the lubricant application portion, and is applied to the second bevel gear and also to the first bevel gear. Accordingly, the gear structure enables the lubricant to be kept on the bevel gears for a longer period of time than the conventional gear structure.

Preferably, at least the guide portion of the gear facing surface may be inclined to come closer to the second bevel gear as the distance from the lubricant receiving portion increases toward the lubricant application portion in the rotational direction.

The inclined guide portion enables the lubricant to be guided even more smoothly from the lubricant receiving portion to the lubricant application portion.

Further, the lubricant application portion may be inclined to come closer to the second bevel gear as the distance increases toward the radially outer side of the second bevel gear.

Specifically, the arrangement may be as follows. The gear facing surface has a gear accommodating recess covering a part of the first bevel gear from a side opposite to the second bevel gear, and the lubricant receiving portion is formed contiguous with the gear accommodating recess.

In this case, the gear accommodating recess may be configured to extend to a position closer to the second bevel gear than the lubricant receiving portion at a side thereof rearward of the first bevel gear in the rotational direction.

Preferably, the arrangement may be as follows. The gear housing has an inner peripheral surface extending annularly in close proximity to an outer peripheral surface of the second bevel gear to receive lubricant splashed from the second bevel gear. The gear facing surface extends annularly along the inner peripheral surface. The gear facing surface further includes an auxiliary lubricant application portion and an auxiliary guide portion. The auxiliary lubricant portion is formed at a position halfway from the lubricant application portion to the first bevel gear in the rotational direction of the second bevel gear and is in close proximity to the second bevel gear. the auxiliary guide portion is inclined to come closer to the second bevel gear as the distance increases toward the auxiliary lubricant application portion in the rotational direction to guide the lubricant received by the inner peripheral surface to the auxiliary lubricant application portion.

With the above-described arrangement, the lubricant splashed from the second bevel gear and received by the inner peripheral surface of the gear housing is guided by the auxiliary guide portion to reach the auxiliary lubricant application portion and applied to the second bevel gear again. Thus, the lubricant can be kept on the bevel gears for an even longer period of time.

In addition, the present invention provides a gear structure including a gear housing, a first bevel gear disposed in the gear housing rotatably about a first rotation axis, and a second bevel gear disposed in the gear housing rotatably about a second rotation axis intersecting the first rotation axis. The second bevel gear is in mesh with the first bevel gear. The gear housing has an inner peripheral surface extending annularly in close proximity to an outer peripheral surface of the second bevel gear to receive lubricant splashed from the second bevel gear, and a gear facing surface extending annularly along the inner peripheral surface to face teeth of the second bevel gear in the direction of the second rotation axis. The gear facing surface has a lubricant application portion in close proximity to the teeth of the second bevel gear, and a guide portion inclined to come closer to the second bevel gear as the distance increases toward the lubricant application portion in the rotational direction of the second bevel gear to guide the lubricant received by the inner peripheral surface to the lubricant application portion.

In this gear structure, lubricant splashed from the rotating second bevel gear is received by the inner peripheral surface of the gear housing and pushed by lubricant splashed continuously to flow gradually in the rotational direction of the second bevel gear, and while being guided by the inclined guide portion, the lubricant reaches the lubricant application portion. The lubricant application portion is in close proximity to the second bevel gear; therefore, the lubricant reaching the lubricant application portion comes into contact with the second bevel gear, thereby being applied to the second bevel gear. Thus, in the gear structure, lubricant once splashed from the second bevel gear is guided to the lubricant application portion by the inclined guide portion and applied to the second bevel gear again. Accordingly, the gear structure enables the lubricant to be kept on the bevel gears for an even longer period of time than the conventional gear structure.

In addition, the present invention provides a motor assembly including a motor having a rotating shaft, the above-described gear structure in which the first bevel gear is rotatably drivably connected to the rotating shaft, and an output shaft having the second bevel gear secured thereto. The output shaft extends along the second rotation axis to the outside of the gear housing.

In addition, the present invention provides a power tool including the above-described motor assembly. The power tool is driven using the motor as a power source.

An embodiment of a power tool according to the present invention will be explained below on the basis of the accompanying drawings.

### Brief Description of Drawings:

Fig. 1 is a side view of a power tool according to an embodiment of the present invention.
Fig. 2 is a rear view of the power tool shown in Fig. 1.
Fig. 3 is a side view of the power tool in Fig. 1, with a brush cover and a body side cover removed therefrom.
Fig. 4 is a side view of a motor assembly included in the power tool shown in Fig. 1.
Fig. 5 is a side sectional view of the motor assembly shown in Fig. 4.
Fig. 6 is a sectional view taken along the line A-A in Fig. 5.
Fig. 7 is a side view of a gear structure in the motor assembly in Fig. 4, with a lower housing removed therefrom.
Fig. 8 is a rear view of the gear structure shown in Fig. 7.
Fig. 9 is a perspective view of an upper housing of the gear structure shown in Fig. 7.

### Description of Embodiments:

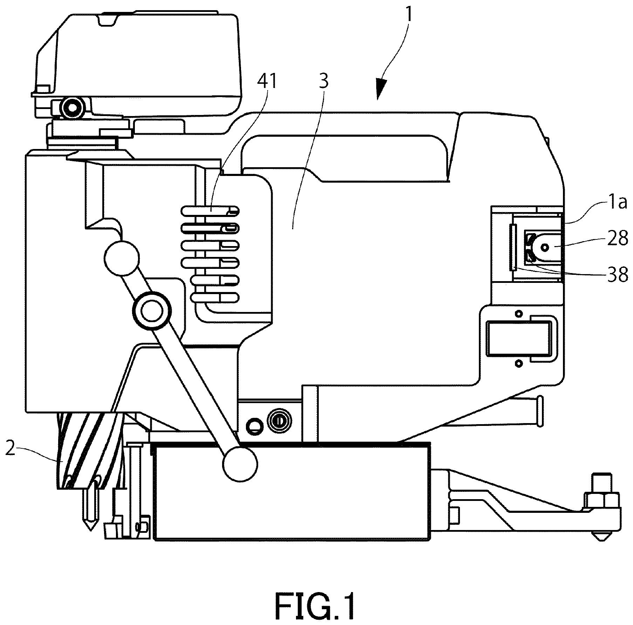

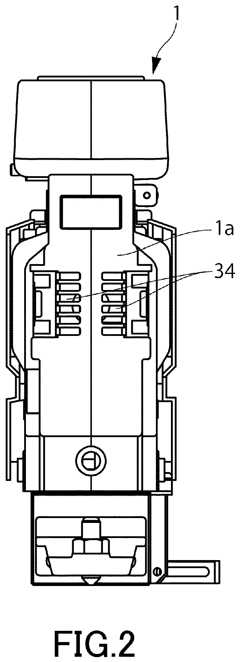

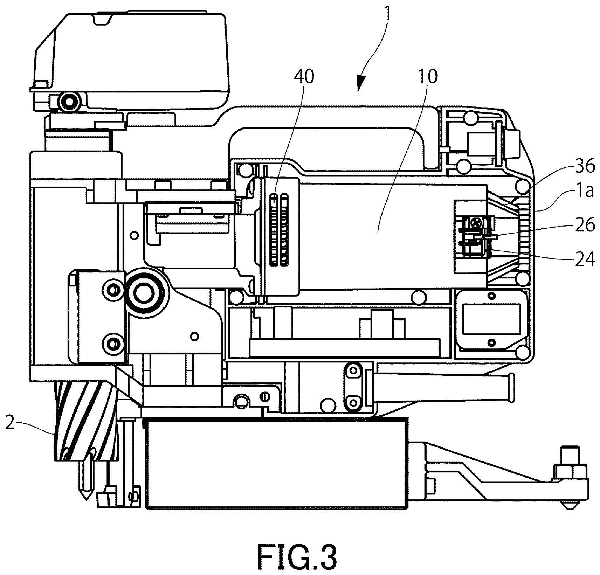

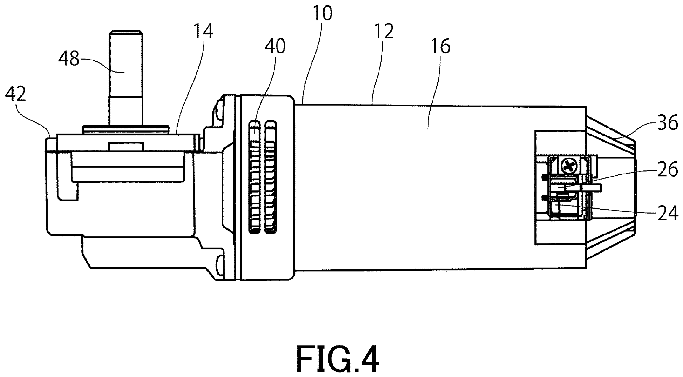

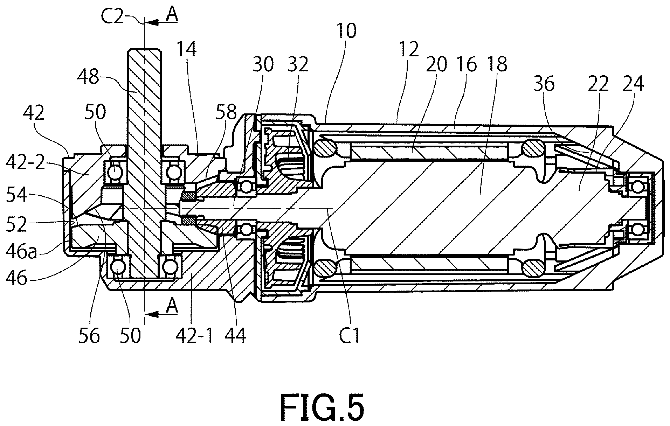

As shown in Figs. 1 and 2, a power tool 1 according to an embodiment of the present invention is a drill including an annular cutter 2. The power tool 1 has a body side cover 3. When the body side cover 3 is removed, as shown in Fig. 3, a built-in motor assembly 10 appears. The motor assembly 10 comprises, as shown in Figs. 4 and 5, an electric motor 12 and a gear structure 14 secured to the forward side (left side as seen in the figures) of the electric motor 12. The power tool 1 is configured to perform a drilling operation by rotationally driving the annular cutter 2 using the electric motor 12 of the motor assembly 10 as a power source.

More specifically, the electric motor 12 of the motor assembly 10 includes, as shown in Fig. 5, a motor housing 16, a rotor 18 rotatably held in the motor housing 16, and a stator 20 disposed around the rotor 18. A commutator 24 (Fig. 4) is provided at a rear end portion 22 of the rotor 18, and a brush 26 is disposed around the commutator 24. It should be noted that the brush 26, when in use, is hidden by being covered with a brush cover 28 (Fig. 1) but exposed to the outside when the brush cover 28 is removed. When the motor assembly 10 has been incorporated in the power tool 1, the brush cover 28 can be removed without removing the body side cover 3, so that the brush 26 can be replaced simply by removing the brush cover 28. The rotor 18 is formed as a member integrated with a rotating shaft 30 extending to the outside of the motor housing 16. A fan 32 is attached to the rotating shaft 30 so that as the rotating shaft 30 rotates, the fan 32 rotates together with the rotating shaft 30. The rotation of the fan 32 allows the outside air to be taken into the motor housing 16 to cool the brush 26 and the commutator 24. Specifically, the power tool 1 has, as shown in Fig. 2, body intake openings 34 formed in a rear end surface 1a thereof. As the fan 32 rotates, the air surrounding the power tool 1 passes through the body intake openings 34 (Fig. 2) formed in the rear end surface 1a of the power tool 1 and further passes through housing intake openings 36 formed in the rear of the motor housing 16, thus being sucked into the motor housing 16. The brush cover 28 is also formed with cover intake openings 38 (Fig. 1), and the air is also sucked into the motor housing 16 through the cover intake openings 38. The air sucked into the motor housing 16 through the housing intake openings 36 and the cover intake openings 38 passes mainly around the brush 26 and the commutator 24 to cool the brush 26 and the commutator 24. The air having passed around the brush 26 and the commutator 24 further passes between the motor housing 16 and the rotor 18 to reach the fan 32 and is discharged to the outside of the motor housing 16 through housing exhaust openings 40 (Fig. 4) in the motor housing 16. The air is eventually discharged to the outside of the power tool 1 through body exhaust openings 41 (Fig. 1) in the body side cover 3.

The gear structure 14 of the motor assembly 10 includes, as shown in Fig. 5, a gear housing 42, a first bevel gear 44 and a second bevel gear 46 which are disposed to mesh with each other in the gear housing 42, and an output shaft 48 extending to the outside of the gear housing 42. The gear housing 42 comprises a lower housing 42-1 secured to the motor housing 16, and an upper housing 42-2 attached to the lower housing 42-1. The first bevel gear 44 is secured to the rotating shaft 30 of the electric motor 12 to rotate about a first rotation axis C1 in response to the rotation of the rotor 18 of the electric motor 12. The output shaft 48 is held by two bearings 50, 50 rotatably about a second rotation axis C2 intersecting the first rotation axis C1 at right angles. The second bevel gear 46 is secured to the output shaft 48, thereby being rotatable about the second rotation axis C2, together with the output shaft 48. In this embodiment, the electric motor 12 rotates clockwise as seen from the rear side (right side as seen in the figure). Accordingly, the first bevel gear 44 also rotates clockwise as seen from the rear side. Consequently, the second bevel gear 46, which is in mesh with the first bevel gear 44, and the output shaft 48 rotate clockwise as seen from above. The second bevel gear 46 is a large-diameter gear having a greater number of teeth than the first bevel gear 44. Therefore, the second bevel gear 46 rotates at a lower speed than the first bevel gear 44. The output shaft 48 is drivably connected to the annular cutter 2 through a gear mechanism (not shown) incorporated in the power tool 1.

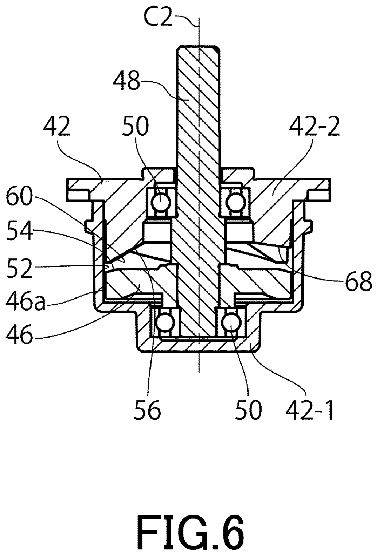

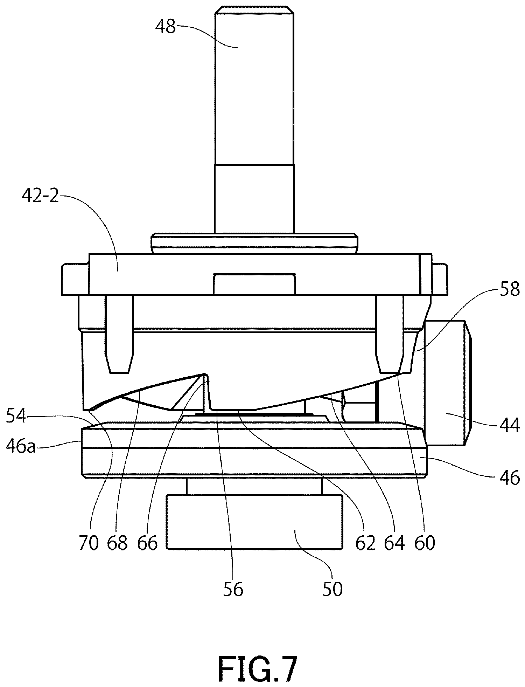

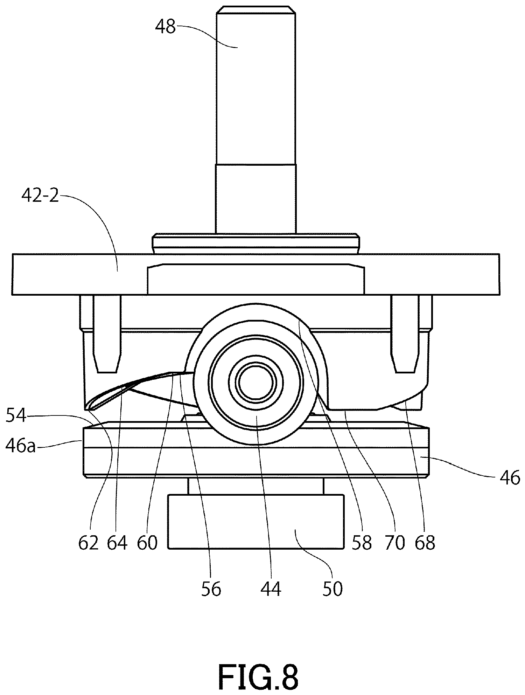

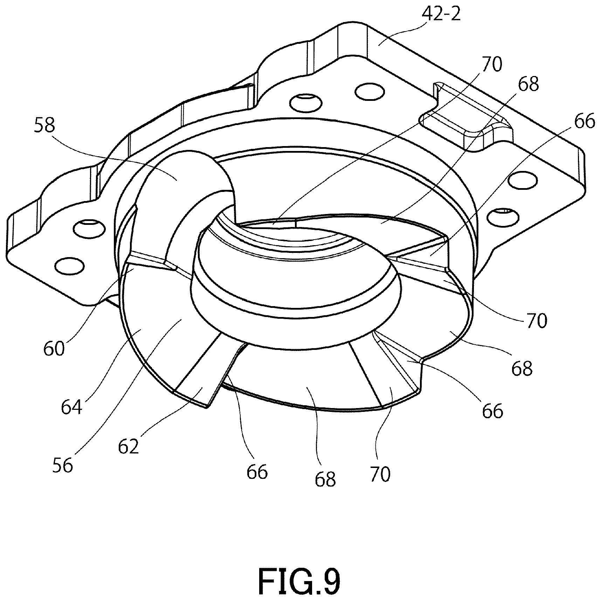

The gear housing 42 has, as shown in Fig. 6, an inner peripheral surface 52 extending annularly in close proximity to an outer peripheral surface 46a of the second bevel gear 46, and a gear facing surface 56 facing teeth 54 of the second bevel gear 46 in the direction of the second rotation axis C2 and extending annularly along the inner peripheral surface 52. The gear facing surface 56 has, as shown in Figs. 7 to 9, a gear accommodating recess 58 covering a part of the first bevel gear 44 from the side opposite to the second bevel gear 46. The gear accommodating recess 58 is configured such that the rear side (right side as seen in Fig. 8) thereof in the rotational direction of the second bevel gear 46 extends to a position closer to the second bevel gear 46 than the forward side (left side as seen in Fig. 8) of the gear accommodating recess 58 in the rotational direction of the second bevel gear 46. The gear facing surface 56 further has a lubricant receiving portion 60 located forward of the first bevel gear 44 in the rotational direction of the second bevel gear 46. The lubricant receiving portion 60 is formed contiguous with the gear accommodating recess 58. The gear facing surface 56 further has a lubricant application portion 62 forward of the lubricant receiving portion 60 in the rotational direction. The lubricant application portion 62 is closer to the second bevel gear 46 than the lubricant receiving portion 60. Further, the gear facing surface 56 has a guide portion 64 extending from the lubricant receiving portion 60 to the lubricant application portion 62. The lubricant receiving portion 60 and the guide portion 64 form substantially one continuous curved surface and are inclined, as a whole, while being curved to come closer to the second bevel gear 46 as the distance increases toward the lubricant application portion 62. The lubricant receiving portion 60 and the guide portion 64 are also inclined to come closer to the second bevel gear 46 as the distance increases toward the radially outer side of the second bevel gear 46. The lubricant application portion 62 is inclined straight to come closer to the second bevel gear 46 as the distance increases toward the radially outer side of the second bevel gear 46. The teeth 54 of the second bevel gear 46 are inclined downward as seen in the figures toward the radially outer side. In this regard, the inclination angle of the lubricant application portion 62 is more acute than that of the teeth 54 of the second bevel gear 46. The gear facing surface 56 further has, as shown in Figs. 7 and 9, a step portion 66, an auxiliary guide portion 68, and an auxiliary lubricant application portion 70 formed thereon, following the lubricant application portion 62 in the rotational direction of the second bevel gear 46. The auxiliary lubricant application portion 70 is formed at a position halfway from the lubricant application portion 62 to the first bevel gear 44 in the rotational direction of the second bevel gear 46 so as to come closer to the second bevel gear 46 in the same way as the lubricant application portion 62. The auxiliary guide portion 68 is inclined while being curved to come closer to the second bevel gear 46 as the distance increases toward the auxiliary lubricant application portion 70, in the same way as the guide portion 64. In addition, two auxiliary guide portions 68 and two auxiliary lubricant application portions 70, which are similar to the above, are formed in succession as far as the gear accommodating recess 58.

The first bevel gear 44 and the second bevel gear 46 are coated with grease as a lubricant for reducing the frictional resistance during rotation.

As the electric motor 12 rotates, the first bevel gear 44, which is secured to the rotating shaft 30 of the electric motor 12, rotates. Consequently, the second bevel gear 46 and the output shaft 48 also rotate. The second bevel gear 46 has a lower rotational speed than the first bevel gear 44 because the second bevel gear 46 has a greater number of teeth than the first bevel gear 44. The centrifugal force is proportional to the radius of rotation and the square of the angular velocity. Regarding a pair of mutually meshed gears, a greater centrifugal force usually acts on the surface of the smaller gear. In the gear structure 14, the first bevel gear 44 is smaller than the second bevel gear 46; therefore, a greater centrifugal force acts on the first bevel gear 44 than on the second bevel gear 46. Accordingly, a greater amount of grease is splashed from the rotating first bevel gear 44. In particular, at an area where the first bevel gear 44 separates from the second bevel gear 46, the grease adhering to the second bevel gear 46 is also splashed. Therefore, a greater amount of grease is splashed from the first bevel gear at the forward side thereof in the rotational direction of the second bevel gear 46.

The grease splashed from the first bevel gear 44 toward the forward side in the rotational direction of the second bevel gear 46 is splashed mainly in the left-upward direction as seen in Fig. 8 and received by the lubricant receiving portion 60. Grease is continuously splashed from the first bevel gear 44. Therefore, the grease received by the lubricant receiving portion 60 is gradually pushed forward in the rotational direction by grease splashed subsequently and thus flows along the guide portion 64. The grease gradually approaches the teeth 54 of the second bevel gear 46 along the guide portion 64. When the grease reaches the lubricant application portion 62, which is in close proximity to the second bevel gear 46, the grease comes into contact with the second bevel gear 46, thereby being applied to the second bevel gear 46. Further, because the lubricant application portion 62 is inclined to come closer to the second bevel gear 46 toward the radially outer side, as has been described above, the grease is applied to the second bevel gear 46 at a position near the outer periphery of the second bevel gear 46 where the teeth 54 are formed, thereby allowing a greater amount of lubricant to be applied to the teeth 54 of the second bevel gear 46. In this way, grease splashed from the first bevel gear 44 is guided from the lubricant receiving portion 60 by the guide portion 64 to reach the lubricant application portion 62 and applied to the second bevel gear 46. The grease is also applied to the first bevel gear 44 through the meshing of the second bevel gear 46 with the first bevel gear 44. Thus, the lubricant is recirculated, and it is possible to keep the grease on the first bevel gear 44 and the second bevel gear 46 for a longer period of time. Because the lubricant is kept, it is possible to prevent wear of the first bevel gear 44 and the second bevel gear 46 and hence possible to maintain the power transmission efficiency.

The grease adhering to the second bevel gear 46 is gradually splashed toward the inner peripheral surface 52 of the gear housing 42 upon receiving centrifugal force generated by rotation of the second bevel gear 46. The grease received by the inner peripheral surface 52 is forced to flow gradually in the rotational direction of the second bevel gear 46 by being pushed by grease splashed successively from the second bevel gear 46. The flowing grease is guided by the inclined guide portion 64 and auxiliary guide portion 68 to approach the second bevel gear 46. When reaching the lubricant application portion 62 and the auxiliary lubricant application portion 70, the grease comes into contact with the second bevel gear 46, thereby being applied to the second bevel gear 46. In the gear structure 14, grease splashed from the second bevel gear 46 to the inner peripheral surface 52 of the gear housing 42 is applied to the second bevel gear 46 again in the way described above. Thus, the grease is recirculated.

It should be noted that a water- and oil-repellent surface treatment may be applied to the gear facing surface 56 and inner peripheral surface 52 of the gear housing 42 so that grease adhering to these surfaces can flow even more easily.

Although one embodiment of the present invention has been described above, the present invention is not limited to the described embodiment. For example, the power tool is not limited to the stationary drill but may be other power tools, e.g. a portable screwdriver. The motor assembly may include an air motor in place of the electric motor. Further, the guide portion may be inclined rectilinearly, or may have other shape, e.g. a stair-like shape. The number of auxiliary guide portions and the number of auxiliary lubricant application portions may be changed as desired. The gear structure may omit the auxiliary guide portions and the auxiliary lubricant application portions. That is, the gear structure may be configured to have only the lubricant receiving portion, the guide portion, and the lubricant application portion. Alternatively, the gear structure may be configured to have only at least one auxiliary guide portion and at least one auxiliary lubricant application portion. The first rotation axis of the first bevel gear and the second rotation axis of the second bevel gear need not always intersect each other at right angles but may be configured to intersect each other at another angle. Further, in the above-described gear structure, the first bevel gear is held by being secured directly to the rotating shaft of the electric motor. However, the arrangement may be as follows. The gear structure includes an input shaft rotatably held by the gear housing. The first bevel gear is secured to the input shaft, and the input shaft and the rotating shaft of the electric motor are connected to each other, thereby allowing the first bevel gear to be rotatably drivably connected indirectly to the rotating shaft of the electric motor.

### List of Reference Signs:

1: power tool
1a: rear end surface
2: annular cutter
3: body side cover
10: motor assembly
12: electric motor
14: gear structure
16: motor housing
18: rotor
20: stator
22: rear end portion
24: commutator
26: brush
28: brush cover
30: rotating shaft
32: fan
34: body intake openings
36: housing intake openings
38: cover intake openings
40: housing exhaust openings
41: body exhaust openings
42: gear housing
42-1: lower housing
42-2: upper housing
44: first bevel gear
46: second bevel gear
46a: outer peripheral surface
48: output shaft
50: bearings
52: inner peripheral surface
54: teeth
56: gear facing surface
58: gear accommodating recess
60: lubricant receiving portion
62: lubricant application portion
64: guide portion
66: step portion
68: auxiliary guide portion
70: auxiliary lubricant application portion
C1: first rotation axis
C2: second rotation axis

## Claims

1. A gear structure (14) comprising:
a gear housing (42);
a first bevel gear (44) disposed in the gear housing (42) rotatably about a first rotation axis; and
a second bevel gear (46) disposed in the gear housing (42) rotatably about a second rotation axis intersecting the first rotation axis, the second bevel gear (46) being in mesh with the first bevel gear (44);
wherein the gear housing (42) has a gear facing surface (56) extending annularly to face teeth (54) of the second bevel gear (46) in a direction of the second rotation axis; and
wherein the gear facing surface (56) has a lubricant receiving portion (60) located forward of the first bevel gear (44) in a rotational direction of the second bevel gear (46) to receive lubricant splashed from the first bevel gear (44), a lubricant application portion (62) located forward of the lubricant receiving portion (60) in the rotational direction, the lubricant application portion (62) being closer to the second bevel gear (46) than the lubricant receiving portion (60), and a guide portion (64) extending from the lubricant receiving portion (60) to the lubricant application portion (62) to guide the lubricant received by the lubricant receiving portion (60) to the lubricant application portion (62).

2. The gear structure (14) of claim 1, wherein at least the guide portion (64) is inclined to come closer to the second bevel gear (46) as a distance from the lubricant receiving portion (60) increases toward the lubricant application portion (62) in the rotational direction.

3. The gear structure (14) of claim 1 or 2, wherein the lubricant application portion (62) is inclined to come closer to the second bevel gear (46) as a distance increases toward a radially outer side of the second bevel gear (46).

4. The gear structure (14) of any one of claims 1 to 3, wherein the gear facing surface (56) has a gear accommodating recess (58) covering a part of the first bevel gear (44) from a side opposite to the second bevel gear (46), wherein the lubricant receiving portion (60) is formed contiguous with the gear accommodating recess (58).

5. The gear structure (14) of claim 4, wherein the gear accommodating recess (58) extends to a position closer to the second bevel gear (46) than the lubricant receiving portion (60) at a side thereof rearward of the first bevel gear (44) in the rotational direction of the second bevel gear (46).

6. The gear structure (14) of any one of claims 1 to 5, wherein the gear housing (42) has an inner peripheral surface (52) extending annularly in close proximity to an outer peripheral surface (46a) of the second bevel gear (46) to receive lubricant splashed from the second bevel gear (46), and the gear facing surface (56) extends annularly along the inner peripheral surface (52); and
wherein the gear facing surface (56) further includes an auxiliary lubricant application portion (70) and an auxiliary guide portion (68), the auxiliary lubricant application portion being formed at a position halfway from the lubricant application portion (62) to the first bevel gear (44) in the rotational direction of the second bevel gear (46) and being in close proximity to the second bevel gear (46), the auxiliary guide portion (68) being inclined to come closer to the second bevel gear (46) as a distance increases toward the auxiliary lubricant application portion (70) in the rotational direction to guide the lubricant received by the inner peripheral surface (52) to the auxiliary lubricant application portion (70).

7. A motor assembly (10) comprising:
a motor having a rotating shaft (30);
the gear structure (14) of any one of claims 1 to 6, the first bevel gear (44) being rotatably drivably connected to the rotating shaft (30); and
an output shaft having the second bevel gear (46) secured thereto, the output shaft extending along the second rotation axis to an outside of the gear housing (42).

8. A power tool (1) comprising the motor assembly (10) of claim 7, the power tool (1) being driven using the motor as a power source.

## Patentansprüche

1. Getriebestruktur (14), die Folgendes aufweist:
ein Getriebegehäuse (42);
ein erstes Kegelrad (44), welches in dem Getriebegehäuse (42) drehbar um eine erste Drehachse angeordnet ist; und
ein zweites Kegelrad (46), welches in dem Getriebegehäuse (42) drehbar um eine zweite Drehachse angeordnet ist, welche die erste Drehachse schneidet, wobei das zweite Kegelrad (46), in Eingriff mit dem ersten Kegelrad (44) ist;
wobei das Getriebegehäuse (42) eine zum Getriebe weisende Oberfläche (56) hat, welche sich ringförmig erstreckt, so dass sie zu Zähnen (54) des zweiten Kegelrades (46) in Richtung der zweiten Drehachse weist; und
wobei die zum Getriebe weisende Oberfläche (56) einen Schmiermittelaufnahmeteil (60) hat, der vor dem ersten Kegelrad (44) angeordnet ist,
und zwar in einer Drehrichtung des zweiten Kegelrades (46), um Schmiermittel aufzunehmen, welches von dem ersten Kegelrad (46) weggespritzt wird, weiter einen Schmiermittelaufbringungsteil (62), der in der Drehrichtung vor dem Schmiermittelaufnahmeteil (60) angeordnet ist,
wobei der Schmiermittelaufbringungsteil (62) näher an dem zweiten Kegelrad (46) ist als der Schmiermittelaufnahmeteil (60), und einen Führungsteil (64), der sich von dem Schmiermittelaufnahmeteil (60) zu dem Schmiermittelaufbringungsteil (62) erstreckt, um das Schmiermittel, welches von dem Schmiermittelaufnahmeteil (60) aufgenommen wurde, zu dem Schmiermittelaufbringungsteil (62) zu leiten.

2. Getriebestruktur (14) nach Anspruch 1, wobei zumindest der Führungsteil (64) geneigt ist, so dass er näher an das zweite Kegelrad (46) kommt, wenn eine Distanz von dem Schmiermittelaufnahmeteil (60) zu dem Schmiermittelaufbringungsteil (62) zunimmt, und zwar in der Drehrichtung.

3. Getriebestruktur (14) nach Anspruch 1 oder 2, wobei der Schmiermittelaufbringungsteil (62) geneigt ist, so dass er näher an das zweite Kegelrad (46) kommt, wenn eine Distanz zu einer radialäußeren Seite des zweiten Kegelrades (46) zunimmt.

4. Getriebestruktur (14) nach einem der Ansprüche 1 bis 3, wobei die zum Getriebe weisende Oberfläche (56) eine Zahnradaufnahmevertiefung (58) hat, die einen Teil des ersten Kegelrades (44) von einer Seite gegenüberliegend zum zweiten Kegelrad (46) abdeckt, wobei der Schmiermittelaufnahmeteil (60) angrenzend an die Zahnradaufnahmevertiefung (58) geformt ist.

5. Getriebestruktur (14) nach Anspruch 4, wobei die Zahnradaufnahmevertiefung (58) sich zu einer Position näher an dem zweiten Kegelrad (46) erstreckt als der Schmiermittelaufnahmeteil (60), und zwar an einer Seite davon in der Drehrichtung des zweiten Kegelrades (46) hinter dem ersten Kegelrad (44).

6. Getriebestruktur (14) nach einem der Ansprüche 1 bis 5, wobei das Getriebegehäuse (42) eine Innenumfangsfläche (52) hat, die sich ringförmig in enger Nähe an einer Außenumfangsfläche (46a) des zweiten Kegelrades (46) erstreckt, um Schmiermittel aufzunehmen, welches von dem zweiten Kegelrad (46) weggespritzt wird, und wobei die zum Getriebe weisende Oberfläche (56) sich ringförmig entlang der Innenumfangsfläche (52) erstreckt; und
wobei die zum Getriebe weisende Oberfläche (56) weiter einen Hilfsschmiermittelaufbringungsteil (70) und ein Hilfsführungsteil (68) aufweist, wobei der Hilfsschmiermittelaufbringungsteil an einer Position auf der Hälfte von dem Schmiermittelaufbringungsteil (62) zum ersten Kegelrad (44) in der Drehrichtung des zweiten Kegelrades (46) geformt ist und in enger Nähe zum zweiten Kegelrad (46) ist, wobei der Hilfsführungsteil (68) so geneigt ist, dass er näher an das zweite Kegelrad (46) kommt, wenn eine Distanz zum Hilfsschmiermittelaufbringungsteil (70) in der Drehrichtung zunimmt, um das Schmiermittel, welches von der Innenumfangsfläche (52) aufgenommen wurde, zum Hilfsschmiermittelaufbringungsteil (70) zu leiten.

7. Motoranordnung (10), die Folgendes aufweist:
einen Motor mit einer sich drehenden Welle (30);
die Getriebestruktur (14) nach einem der Ansprüche 1 bis 6, wobei das erste Kegelrad (44) zum Drehantrieb mit der sich drehenden Welle (30) verbunden ist, und
eine Ausgangswelle, wobei das zweite Kegelrad (46) daran befestigt ist, wobei die Ausgangswelle sich entlang der zweiten Drehachse zu einer Außenseite des Getriebegehäuses (42) erstreckt.

8. Angetriebenes Werkzeug (1), welches die Motoranordnung (10) nach Anspruch 7 aufweist, wobei das angetriebene Werkzeug (1)unter Verwendung des Motors als Leistungsquelle angetrieben wird.

## Revendications

1. Structure d'engrenage (14) comprenant :
un carter d'engrenage (42) ;
un premier engrenage conique (44) disposé dans le carter d'engrenage (42) de façon rotative autour d'un premier axe de rotation ; et
un deuxième engrenage conique (46) disposé dans le carter d'engrenage (42) de façon rotative autour d'un deuxième axe de rotation coupant le premier axe de rotation, le deuxième engrenage conique (46) étant en prise avec le premier engrenage conique (44) ;
dans laquelle le carter d'engrenage (42) a une surface tournée vers l'engrenage (56) s'étendant de façon annulaire pour faire face aux dents (54) du deuxième engrenage conique (46) dans une direction du deuxième axe de rotation ; et
dans laquelle la surface tournée vers l'engrenage (56) a une partie de réception de lubrifiant (60) située en avant du premier engrenage conique (44) dans une direction de rotation du deuxième engrenage conique (46) pour recevoir le lubrifiant éclaboussé par le premier engrenage conique (44), une partie d'application de lubrifiant (62) située à l'avant de la partie de réception de lubrifiant (60) dans le direction de la rotation, la partie d'application de lubrifiant (62) étant plus proche du deuxième engrenage conique (46) que la partie de réception de lubrifiant (60), et une partie de guidage (64) s'étendant depuis la partie de réception de lubrifiant (60) jusqu'à la partie d'application de lubrifiant (62) pour guider le lubrifiant reçu par la partie de réception de lubrifiant (60) jusqu'à la partie d'application de lubrifiant (62).

2. Structure d'engrenage (14) selon la revendication 1, dans laquelle au moins la partie de guidage (64) est inclinée pour se rapprocher du deuxième engrenage conique (46) lorsqu'une distance depuis la partie de réception de lubrifiant (60) augmente vers la partie d'application de lubrifiant (62) dans la direction de rotation.

3. Structure d'engrenage (14) selon la revendication 1 ou 2, dans laquelle la partie d'application de lubrifiant (62) est inclinée pour se rapprocher du deuxième engrenage conique (46) lorsqu'une distance augmente vers un côté radialement extérieur du deuxième engrenage conique (46).

4. Structure d'engrenage (14) selon l'une quelconque des revendications 1 à 3, dans laquelle la surface tournée vers l'engrenage (56) a un évidement de logement d'engrenage (58) recouvrant une partie du premier engrenage conique (44) depuis un côté opposé au deuxième engrenage conique (46), dans laquelle la partie de réception de lubrifiant (60) est formée contiguë à l'évidement de logement d'engrenage (58).

5. Structure d'engrenage (14) selon la revendication 4, dans laquelle l'évidement de logement d'engrenage (58) s'étend jusqu'à une position plus proche du deuxième engrenage conique (46) que la partie de réception de lubrifiant (60) sur son côté à l'arrière du premier engrenage conique (44) dans la direction de la rotation du deuxième engrenage conique (46).

6. Structure d'engrenage (14) selon l'une quelconque des revendications 1 à 5, dans laquelle le carter d'engrenage (42) a une surface périphérique interne (52) s'étendant annulairement à proximité immédiate d'une surface périphérique externe (46a) du deuxième engrenage conique (46) pour recevoir le lubrifiant éclaboussé par le deuxième engrenage conique (46), et la surface tournée vers l'engrenage (56) s'étend annulairement le long de la surface périphérique interne (52) ; et
dans lequel la surface tournée vers l'engrenage (56) comporte en outre une partie d'application de lubrifiant supplémentaire (70) et une partie de guidage supplémentaire (68), la partie de lubrifiant supplémentaire (70) étant formée à une position à mi-chemin entre la partie d'application de lubrifiant (62) et le premier engrenage conique (44) dans la direction de la rotation du deuxième engrenage conique (46) et étant à proximité immédiate du deuxième engrenage conique (46), la partie de guidage supplémentaire (68) étant inclinée pour se rapprocher du deuxième engrenage conique (46) lorsqu'une distance augmente vers la partie d'application de lubrifiant supplémentaire (70) dans la direction de la rotation pour guider le lubrifiant reçu par la surface périphérique interne (52) vers la partie d'application de lubrifiant supplémentaire (70).

7. Ensemble moteur (10) comprenant :
un moteur ayant un arbre rotatif (30) ;
la structure d'engrenage (14) selon l'une quelconque des revendications 1 à 6, le premier engrenage conique (44) étant connecté par un entrainement à rotation à l'arbre rotatif (30) ; et
un arbre de sortie auquel est fixé le deuxième engrenage conique (46), l'arbre de sortie s'étendant le long du deuxième axe de rotation vers l'extérieur du carter d'engrenage (42).

8. Outil électrique (1) comprenant l'ensemble moteur (10) selon la revendication 7, l'outil électrique (1) étant entraîné en utilisant le moteur comme source d'alimentation.
